# EUROPÄISCHE PATENTSCHRIFT

(11) **EP 3 825 190 B1**
(45) Veröffentlichungstag und Bekanntmachung des Hinweises auf die Patenterteilung: **22.06.2022**
(21) Anmeldenummer: 20208642.7
(22) Anmeldetag: 19.11.2020
(51) Int. Cl.: B60S 1/00

(54) **ABDECKTEIL EINES KRAFTFAHRZEUGS UND ABDECKANORDNUNG**
COVER FOR MOTOR VEHICLE AND COVER ASSEMBLY
PIÈCE DE RECOUVREMENT D'UN VÉHICULE AUTOMOBILE ET AGENCEMENT DE RECOUVREMENT

(30) Priorität: 19.11.2019 DE 202019106439 U
(43) Veröffentlichungstag der Anmeldung: 26.05.2021
(73) Patentinhaber: REHAU Automotive SE & Co. KG, 95111 Rehau (DE)
(72) Erfinder: Göschel, Rick, 95183 Feilitzsch (DE)

(56) Entgegenhaltungen:
- WO-A1-2015/011064
- US-A1- 2012 243 093
- US-A1- 2017 312 779
- US-B1- 10 307 800

## Beschreibung

Die Erfindung betrifft ein Abdeckteil eines Kraftfahrzeugs, wobei wenigstens ein Bereich des Abdeckteils dafür vorgesehen ist von elektromagnetischen Wellen zu einem Sensor oder von einem Sender durchdrungen zu werden, wobei Niederschlagsablagerungen in fester oder flüssiger Form auf der äußeren Oberfläche dieses Bereichs des Abdeckteils durch die Beschaffenheit der Oberfläche beseitigt und/oder verhindert werden, wobei ein Material, das zumindest auf der Oberfläche dieses Bereiches des Abdeckteils verwendet ist und diese Niederschlagsablagerungen verhindert hydrophobe Eigenschaften aufweist. Hydrophobe Eigenschaften bedeutet hierbei, dass die Oberfläche bei Raumtemperatur mit Wasser einen Kontaktwinkel größer 90 Grad ausbildet.

Ein gattungsgemäßes Abdeckteil eines Kraftfahrzeuges kann der Patentschrift EP 1 472 119 B1 entnommen werden. Nachteilig an einem Abdeckteil des Stands der Technik ist jedoch, dass hydrophobe Eigenschaften stark von einer genau definierten Oberflächenstruktur und möglichst dauerhaft gleichbleibenden Eigenschaften des Materials, das auf der Oberfläche des Abdeckteils verwendet ist abhängen. Durch Alterungsprozesse, aggressive Reinigungsmittel, Steinschläge, mechanische Beschädigungen usw. nimmt die Fähigkeit des Bereichs des Abdeckteils Niederschlagsablagerungen zu beseitigen und/oder zu verhindern über die Zeit daher ab. Sobald dann die Niederschlagsablagerungen nicht mehr zuverlässig auf diesem Bereich verhindert werden, kommt es zu Störungen, Fehlmessungen oder sogar einem vollständigen Ausfall des Sensors oder des Senders, da die entsprechenden elektromagnetischen Wellen den Bereich des Abdeckteils nicht mehr ausreichend ungestört oder gar nicht mehr passieren können. Weitere gattungsgemäße Abdeckteile können den Dokumenten US 10307800 B1, US 2012/243093 A1, US 2017/312779 A1 oder WO 2015/011064 A1 entnommen werden.

Aufgabe der vorliegenden Erfindung ist es daher ein gattungsgemäßes Abdeckteil eines Kraftfahrzeuges dahingehend zu verbessern, dass ein Schutz des Bereichs des Abdeckteils vor Niederschlagsablagerungen deutlich länger gewährleistet ist.

Diese Aufgabe wird vorliegend gelöst durch ein Abdeckteil eines Kraftfahrzeugs, wobei wenigstens ein Bereich des Abdeckteils dafür vorgesehen ist von elektromagnetischen Wellen zu einem Sensor oder von einem Sender durchdrungen zu werden, wobei Niederschlagsablagerungen in fester oder flüssiger Form auf der äußeren Oberfläche dieses Bereichs des Abdeckteils durch die Beschaffenheit der Oberfläche beseitigt und/oder verhindert werden, wobei ein Material, das zumindest auf der Oberfläche dieses Bereichs des Abdeckteils verwendet ist und diese Niederschlagsablagerungen verhindert hydrophobe Eigenschaften aufweist, wobei die Oberfläche und das Material durch eine wechselbare Folie definiert wird, die zumindest auf der nach außen freiliegenden Seite hydrophobe Eigenschaften aufweist. Die erfindungsgemäße Ausbildung der hydrophoben Oberfläche durch eine wechselbare Folie ermöglicht es in vorteilhafter Weise, die hydrophobe Eigenschaft des Bereichs des Abdeckteils zu regenerieren, indem eine neue entsprechend ausgebildete Folie verwendet wird. Dies kann beispielsweise durch einen Wechsel oder einen Austausch der Folie erfolgen. Die maximale Einsatzdauer des Abdeckteils kann hierdurch insgesamt erhöht werden. Das Nachlassen der hydrophoben Eigenschaften des Bereichs kann insbesondere durch Verschmutzungen und/oder Beschädigungen erfolgen.

Es ist eine Vielzahl von wenigstens zwei derartiger Folien vorgesehen, die übereinander angeordnet und wie ein abreißbares Abreißvisier ausgebildet sind, sodass bei Nachlassen der hydrophoben Eigenschaften der außenliegenden Folie diese außenliegende Folie abgerissen werden kann, damit die darunter befindliche weitere Folie die neue hydrophobe Oberfläche bildet. Durch das Vorsehen von mehreren als Abreißvisier übereinander angeordneter Folien mit hydrophoben Oberflächeneigenschaften ist es möglich, zum Beispiel während der üblichen Wartungsintervalle des Kraftfahrzeugs, die Oberfläche des Bereichs des Abdeckteils zu regenerieren, in dem die Oberste der Folien entfernt wird, damit die darunter befindliche weitere Folie die neue hydrophobe Oberfläche bildet. Die maximale Einsatzdauer des Abdeckteils kann hierdurch insgesamt noch weiter erhöht werden.

Bevorzugt sind wenigstens 3, weiter bevorzugt wenigsten 5 Folien übereinander angeordnet.

Das Material, also vorliegend das Folienmaterial, kann bevorzugt zusätzlich ultraviolette Strahlung absorbieren und/oder die Folien können eine zusätzliche, ultraviolette Strahlung absorbierende Schicht aufweisen. Insbesondere bei der Verwendung von Polycarbonat für die Herstellung des Abdeckteils ist es sinnvoll, die Folien zusätzlich als Schutz des Abdeckteils vor zu viel ultravioletter Strahlung zu verwenden, da Polycarbonat ansonsten zum vergilben oder eintrüben neigt.

Die Folien können durch eine Beschichtung des Bereichs des Abdeckteils gebildet sein. Dies bedeutet, dass die Folien nicht in einem bereits fertigen Zustand auf das Abdeckteil appliziert werden, sondern die Folien als Beschichtung auf dem Abdeckteil abgeschieden werden.

Die Folien können beispielhaft als Sprühfolien aufgebracht sein.

Die Folien können eine Klebstoffschicht aufweisen. Die Klebstoffschicht kann hierbei als Verbindungsschicht zwischen den einzelnen Folien und/oder zu dem Abdeckteil dienen.

Die Folien sind bevorzugt so ausgebildet, dass auch Feststoffpartikel eine geringe Haftung auf der Oberfläche zeigen. Insbesondere sind die Folien so ausgebildet, dass Feststoffpartikel mit (an sich bekannten) Waschdüsen für Scheinwerfer entfernbar sind. Bevorzugt weisen die Folien hierfür eine erhöhte Härte, Oberflächenhärte oder eine Schicht mit erhöhter Härte oder Oberflächenhärte, das heißt einem hohen Widerstand gegen das Eindringen von Feststoffpartikel auf. Feststoffpartikel können insbesondere Stäube, Sande oder Steine sowie organischer Abrieb wie bspw. Gummi sein.

Das Abdeckteil kann aus einem transparenten oder teil-transparenten Material gebildet sein und die Folien können ebenfalls transparent oder teil-transparent sein. Insgesamt ergibt sich somit ein Bereich des Abdeckteils der insbesondere für sichtbares oder infrarotes Licht durchscheinend oder teildurchscheinend ist.

Das Abdeckteil kann insbesondere eine Stoßfängerverkleidung oder eine Kotflügelverkleidung oder ein Spoiler oder eine Türverkleidung oder eine Schwellerverkleidung oder ein Dachmodul oder eine Kühlerverkleidung sein.

Weiterhin Teil der Erfindung ist eine Abdeckanordnung eines Kraftfahrzeuges mit einem wie vorstehend beschriebenen Abdeckteil und mit einem hinter dem Abdeckteil angeordneten Sensor und/oder Sender. Hinter dem Abdeckteil angeordnet bedeutet hierbei, dass der Sensor und/oder der Sender auf der der bestimmungsgemäßen Sichtseite gegenüberliegenden Seite des Abdeckteils angeordnet ist.

Der Sensor und/oder Sender kann einen Lidar-Sensor und/oder einen Radarsensor und/oder einen Radarstrahler und/oder einen Kamerasensor und/oder einen Infrarotsensor und/oder einen Infrarotstrahler umfassen.

Das Abdeckteil kann aus einem Polymermaterial bestehen, das Polysulfon (PSU), Poly(ethersulfon) (PES), Polyetherimid (PEI), Poly(phenylensulfid) (PPS), Polyphenylensulfon (PPSU), Polyetheretherketon (PEEK), Polyetherketone (PEK), Polyamidimid (PAI), Poly-m-phenylenisophthalamid (PMI), Polyphthalamide (PPA), Polybenzimidazole (PBI), Polytetrafluorethylen (PTFE), Perfluoralkoxylalkan (PFA), Polyoxymethylen (POM), Polyamid (PA), Polyethylenterephthalat (PET), Polybutylenterephtalat (PBT), Polymethylmethacrylat (PMMA), Polystyrol (PS), Syndiotaktisches Polystyrol (sPS), Polycarbonat (PC), Styrol-Acrylnitril-Copolymer (SAN), Polyphenylenether (PPE), Ethylen-Propylen-Dien-Kautschuk (EPDM), Acrylnitril-Butadien-Styrol (ABS), Polylactat (PLA), Polyethylen (PE), Polypropylen (PP), Polyvinylchlorid (PVC), Acrylnitril-Styrol-Acrylat-Copolymere (ASA) oder Mischungen der vorgenannten Polymermaterialien umfasst. Sämtliche vorgenannten Kunststoffmaterialien oder Mischungen von Kunststoffmaterialien können zudem Verstärkungsfasern oder Verstärkungspartikel aufweisen.

Das Folienmaterial der Folien kann insbesondere Polyurethan umfassen.

Das Abdeckteil weist bevorzugt eine Wanddicke im Bereich von 1,5 mm bis 3,5 mm auf.

Im Folgenden wird die Erfindung anhand lediglich Ausführungsbeispiele darstellender Figuren näher erläutert. Gleiche oder funktionsgleiche Elemente sind mit den gleichen Bezugszeichen versehen.

Es zeigen:
- Fig. 1 bis Fig. 4: Außenansichten eines ersten erfindungsgemäßen Abdeckteils an einem Kraftfahrzeug;
- Fig. 5 und Fig. 6: Schnittdarstellung durch das erste erfindungsgemäße Abdeckteil,
- Fig. 7 bis 10: Außenansichten eines zweiten erfindungsgemäßen Abdeckteils an einem Kraftfahrzeug,
- Fig. 11 und 12: Schnittdarstellung durch das zweite erfindungsgemäße Abdeckteil.

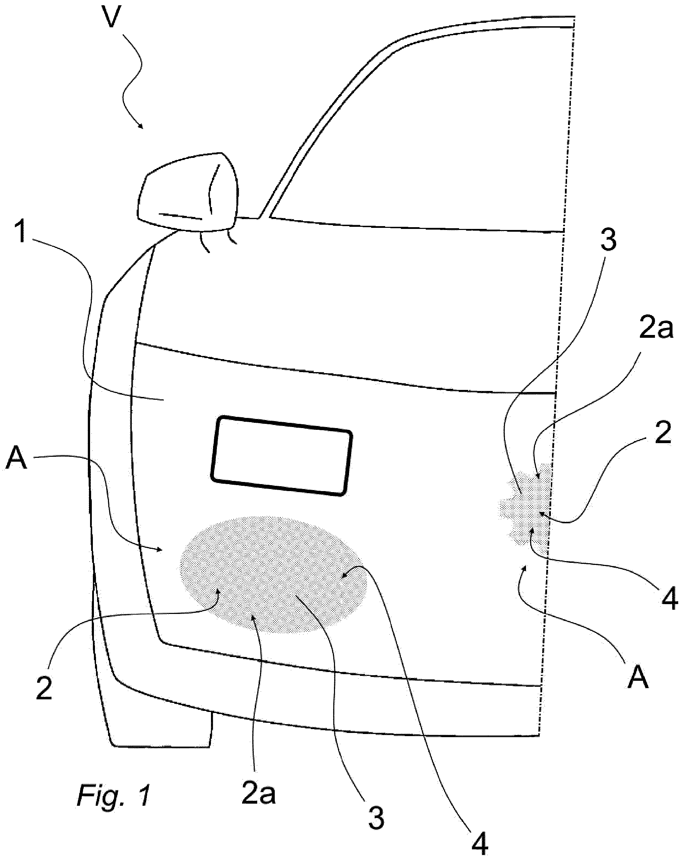

Die Fig. 1 zeigt ein erstes erfindungsgemäßes Abdeckteil 1 eines Kraftfahrzeugs V, wobei wenigstens ein Bereich A des Abdeckteils 1 dafür vorgesehen ist von elektromagnetischen Wellen zu einem Sensor 10 oder von einem Sender 10 durchdrungen zu werden. Niederschlagsablagerungen in fester oder flüssiger Form werden auf der äußeren Oberfläche 2 dieses Bereichs A des Abdeckteils 1 durch die Beschaffenheit der Oberfläche 2 beseitigt und/oder verhindert. Hierzu weist ein Material 2a, das zumindest auf der Oberfläche 2 dieses Bereichs A des Abdeckteils 1 verwendet ist und diese Niederschlagsablagerungen verhindert hydrophobe Eigenschaften auf. Die Oberfläche 2 und das Material 2a werden durch eine wechselbare Folie 3 definiert, die zumindest auf der nach außen freiliegenden Seite 4 hydrophobe Eigenschaften aufweist.

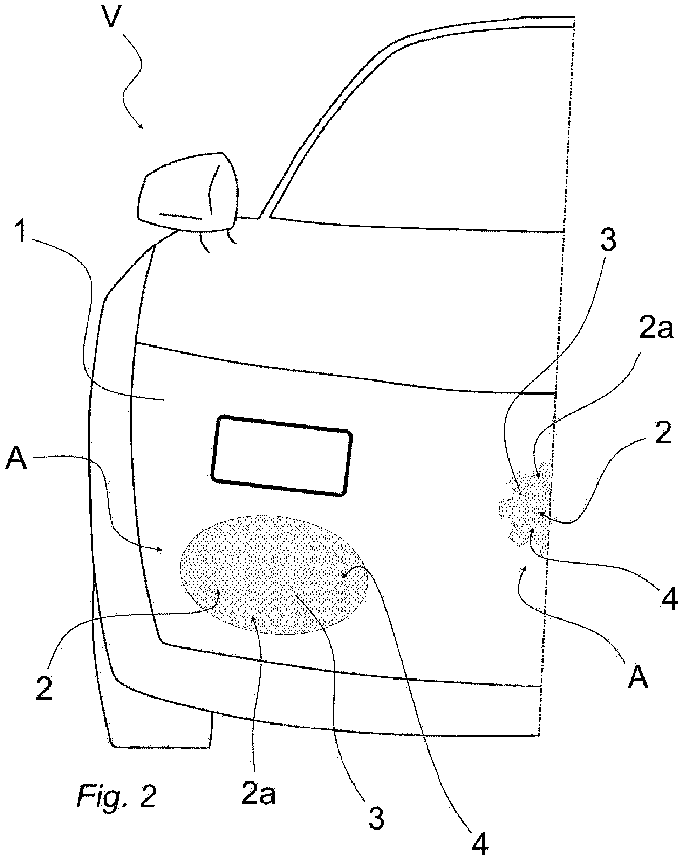

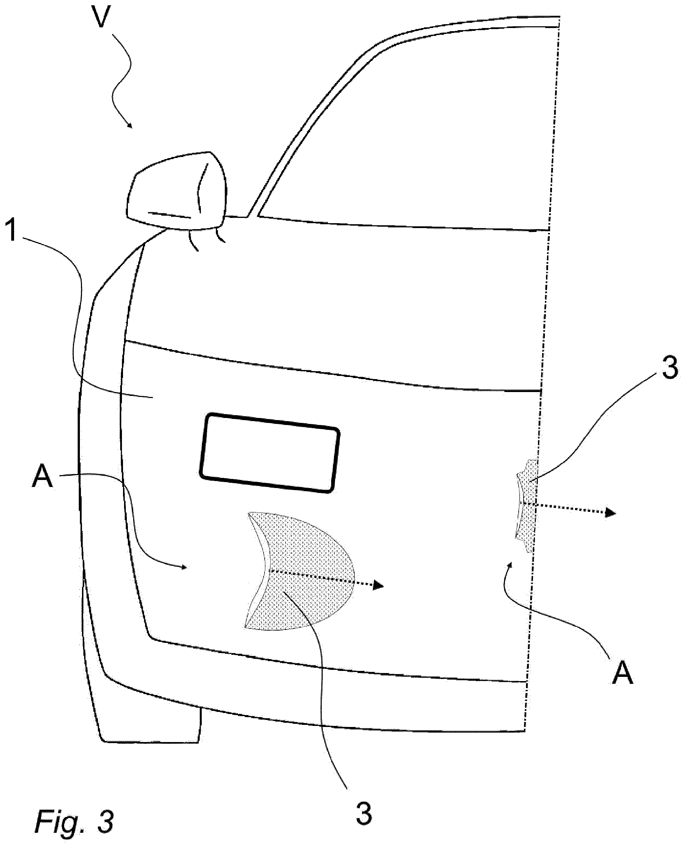

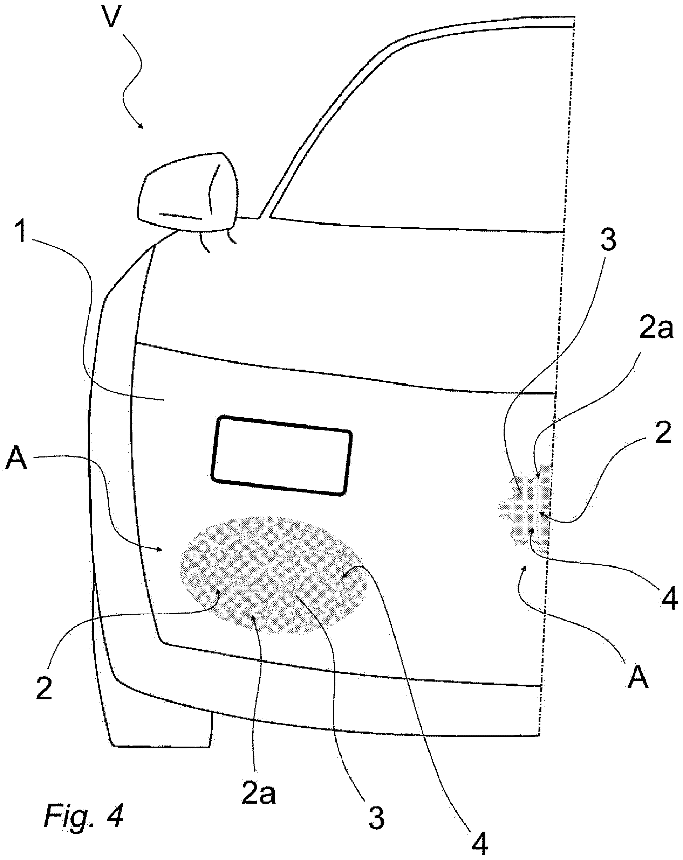

Bei Nachlassen der hydrophoben Eigenschaften der Folie 3 (vgl. Fig. 2) kann diese Folie 3 abgerissen werden (vgl. Fig. 3) und durch eine neue Folie 3 ersetzt werden (vgl. Fig. 4).

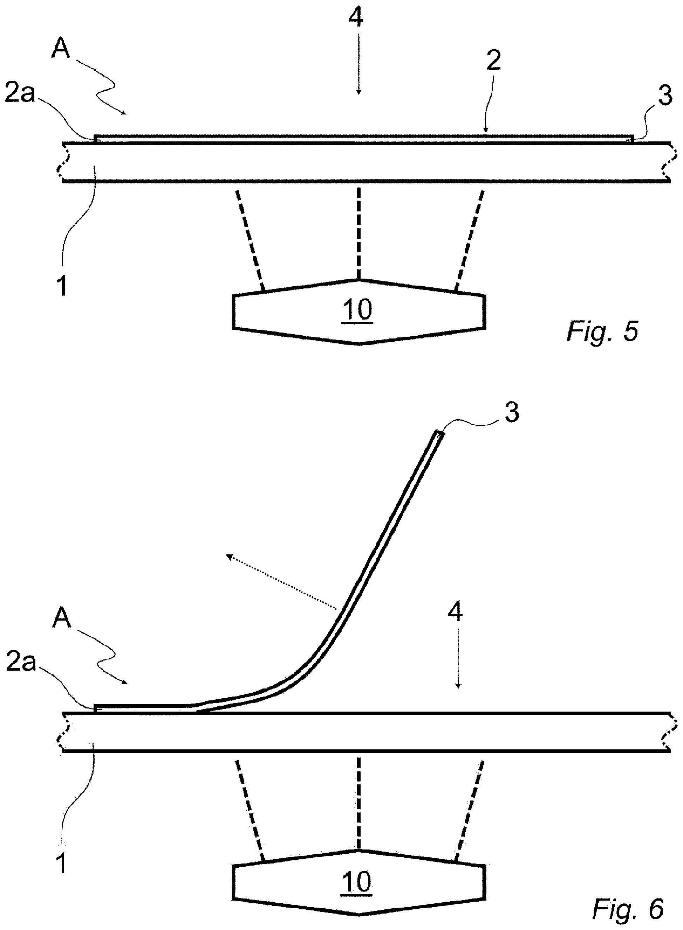

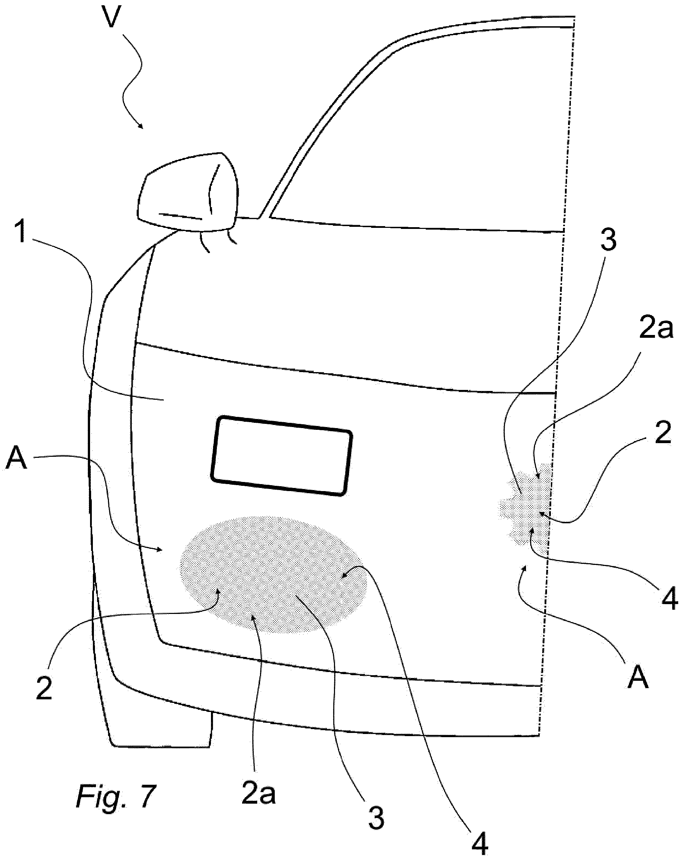

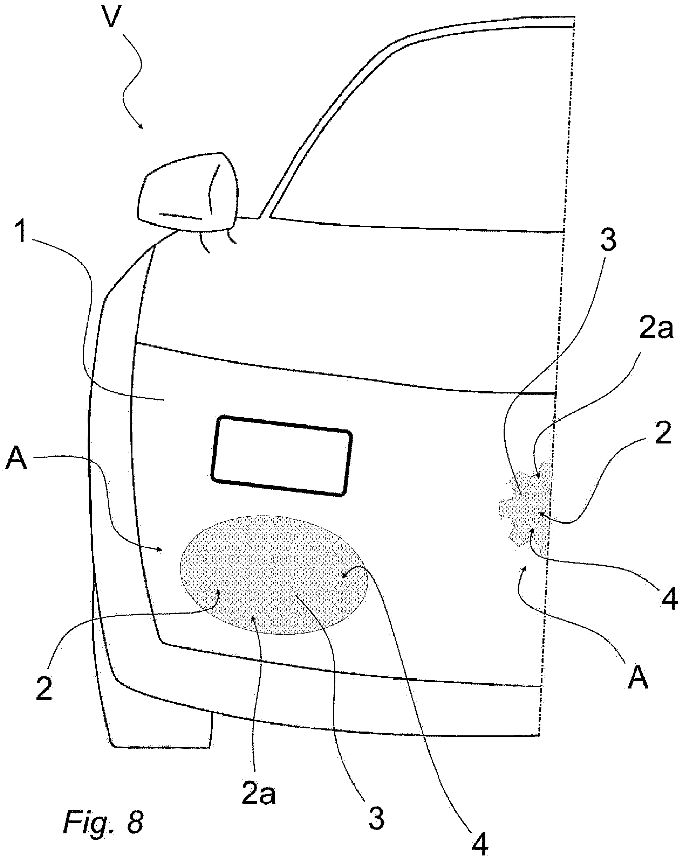

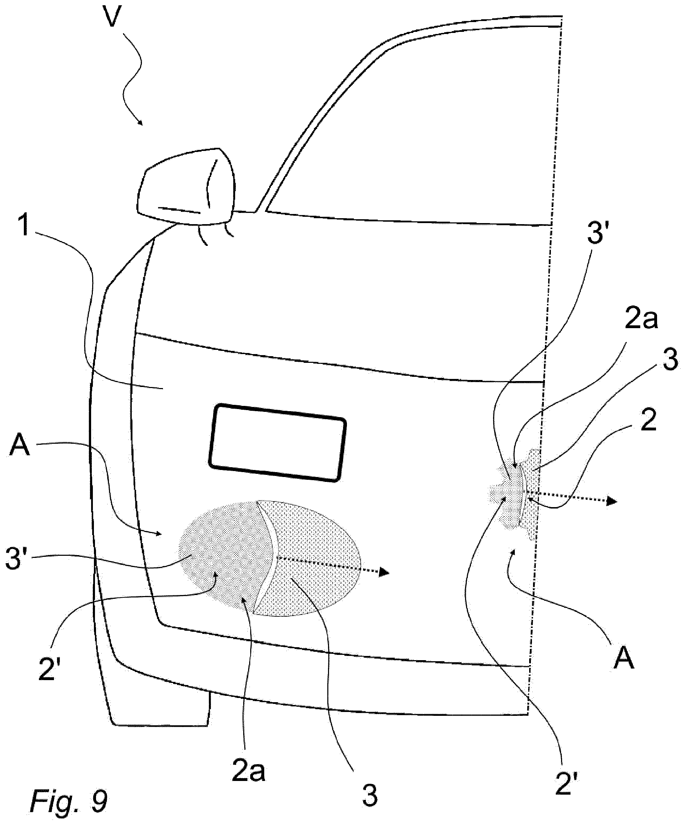

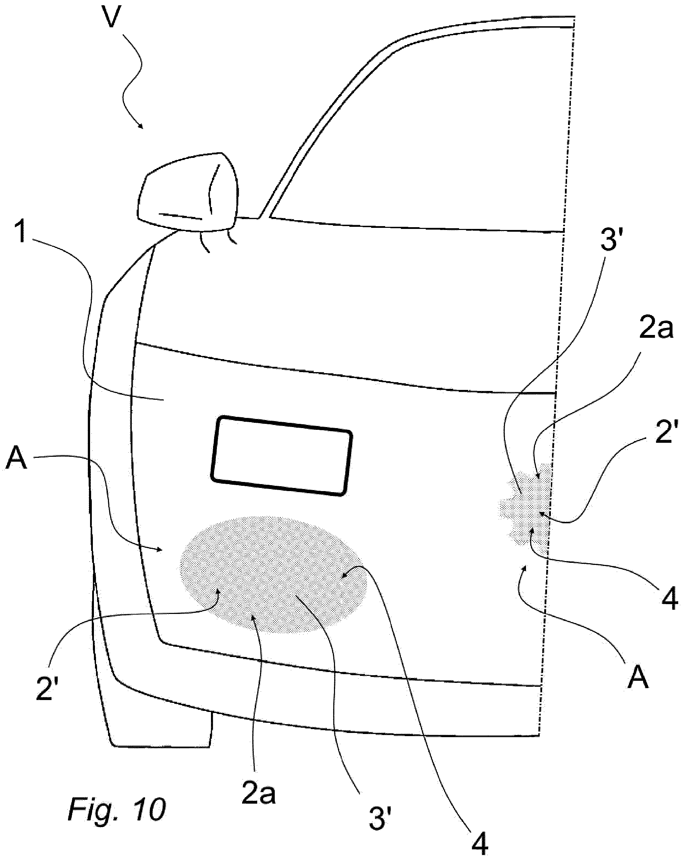

In den Schnittdarstellungen durch ein Abdeckteil 1 gemäß der Fig. 1 bis Fig 4 ist in den Fig. 5 und Fig. 6 diese erfindungsgemäße Abdeckanordnung eines Kraftfahrzeuges mit einem Abdeckteil 1 und mit einem hinter dem Abdeckteil 1 angeordneten Sensor 10 und/oder Sender 10 dargestellt. Der Sensor 10 und/oder Sender 10 umfasst dabei einen Lidar-Sensor und/oder einen Radarsensor und/oder einen Radarstrahler und/oder einen Kamerasensor und/oder einen Infrarotsensor und/oder einen Infrarotstrahler. Ein Bereich A des Abdeckteils 1 ist dafür vorgesehen von elektromagnetischen Wellen zu dem Sensor 10 oder von dem Sender 10 durchdrungen zu werden, wobei Niederschlagsablagerungen in fester oder flüssiger Form auf der äußeren Oberfläche 2, 2' dieses Bereichs A des Abdeckteils 1 durch die Beschaffenheit der Oberfläche 2, 2' beseitigt und/oder verhindert werden. Ein Material 2a, das zumindest auf der Oberfläche 2, 2' dieses Bereichs A des Abdeckteils 1 verwendet ist und diese Niederschlagsablagerungen verhindert weist hydrophobe Eigenschaften auf. Die Oberfläche 2 und das Material 2a werden durch eine wechselbare Folie 3 definiert, die zumindest auf der nach außen freiliegenden Seite 4 hydrophobe Eigenschaften aufweist. Bei Nachlassen der hydrophoben Eigenschaften der Folie 3 kann diese Folie 3 entsprechend abgerissen werden (vgl. Fig. 6) und durch eine neue Folie 3 ersetzt werden.Die Fig. 7 zeigt ein weiteres erfindungsgemäßes Abdeckteil 1 eines Kraftfahrzeugs V, wobei wenigstens ein Bereich A des Abdeckteils 1 dafür vorgesehen ist von elektromagnetischen Wellen zu einem Sensor 10 oder von einem Sender 10 durchdrungen zu werden, wobei Niederschlagsablagerungen in fester oder flüssiger Form auf der äußeren Oberfläche 2, 2' dieses Bereichs A des Abdeckteils 1 durch die Beschaffenheit der Oberfläche 2, 2' beseitigt und/oder verhindert werden. Ein Material 2a, das zumindest auf der Oberfläche 2, 2' dieses Bereichs A des Abdeckteils 1 verwendet ist und diese Niederschlagsablagerungen verhindert weist hydrophobe Eigenschaften auf. Die Oberfläche 2, 2' und das Material 2a werden durch eine wechselbare Folie 3, 3' definiert, die zumindest auf der nach außen freiliegenden Seite 4 hydrophobe Eigenschaften aufweist. Hierbei ist eine Vielzahl von wenigstens zwei derartiger Folien 3, 3' vorgesehen, die übereinander angeordnet und wie ein abreißbares Abreißvisier ausgebildet sind, sodass bei Nachlassen der hydrophoben Eigenschaften der außenliegenden Folie 3 (vgl. Fig. 8) diese außenliegende Folie 3 abgerissen werden kann (vgl. Fig. 9), damit die darunter befindliche weitere Folie 3' die neue hydrophobe Oberfläche 2' bildet (vgl. Fig. 10).

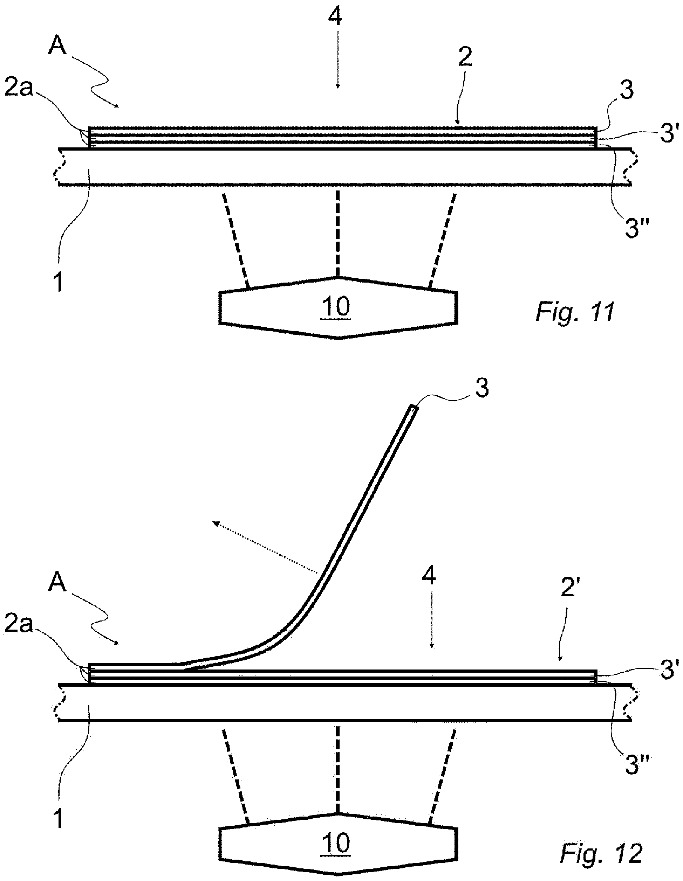

In den Schnittdarstellungen durch ein Abdeckteil 1 ist in den Fig. 11 und Fig. 12 die weitere erfindungsgemäße Abdeckanordnung eines Kraftfahrzeuges mit einem Abdeckteil 1 und mit einem hinter dem Abdeckteil 1 angeordneten Sensor 10 und/oder Sender 10 dargestellt. Der Sensor 10 und/oder Sender 10 umfasst dabei einen Lidar-Sensor und/oder einen Radarsensor und/oder einen Radarstrahler und/oder einen Kamerasensor und/oder einen Infrarotsensor und/oder einen Infrarotstrahler. Ein Bereich A des Abdeckteils 1 ist dafür vorgesehen von elektromagnetischen Wellen zu dem Sensor 10 oder von dem Sender 10 durchdrungen zu werden, wobei Niederschlagsablagerungen in fester oder flüssiger Form auf der äußeren Oberfläche 2, 2' dieses Bereichs A des Abdeckteils 1 durch die Beschaffenheit der Oberfläche 2, 2' beseitigt und/oder verhindert werden. Ein Material 2a, das zumindest auf der Oberfläche 2, 2' dieses Bereichs A des Abdeckteils 1 verwendet ist und diese Niederschlagsablagerungen verhindert weist hydrophobe Eigenschaften auf. Die Oberfläche 2, 2' und das Material 2a werden durch eine wechselbare Folie 3, 3' definiert, die zumindest auf der nach außen freiliegenden Seite 4 hydrophobe Eigenschaften aufweist. Im Vergleich zu dem Abdeckteil aus Fig. 1 bis Fig. 4 sind hier drei Folien 3, 3', 3" vorgesehen, die übereinander angeordnet und wie ein abreißbares Abreißvisier ausgebildet sind. In Fig. 12 ist ersichtlich, dass bei Nachlassen der hydrophoben Eigenschaften der außenliegenden Folie 3 diese außenliegende Folie 3 abgerissen werden kann, damit die darunter befindliche weitere Folie 3' die neue hydrophobe Oberfläche 2' bildet. Hiervon ausgehend ist es dann möglich, dass bei Nachlassen der hydrophoben Eigenschaften der nunmehr außenliegenden Folie 3' diese außenliegende Folie 3' abgerissen werden kann, damit die darunter befindliche weitere Folie 3" die neue hydrophobe Oberfläche bildet. Dieser Vorgang ist bei einem Abdeckteil 1 mit mehr als drei Folien natürlich entsprechend öfter wiederholbar.

Für alle gezeigten und vorstehend beschriebenen Ausführungsbeispiele gilt folgendes:
Das Material der Folie 3 oder der Folien 3, 3', also das Folienmaterial 2a absorbiert zusätzlich ultraviolette Strahlung. Alternativ oder in Kombination weist die Folie 3 oder weisen die Folien 3, 3' eine zusätzliche, ultraviolette Strahlung absorbierende Schicht auf.

Die Folie 3, oder die Folien 3, 3' können als vorkonfektionierte Folie 3 oder Folien 3, 3' auf dem Abdeckteil 1 angebracht sein, oder durch eine Beschichtung des Bereichs A des Abdeckteils 1 gebildet sein. Die Folie 3 oder die Folien 3, 3' können als Sprühfolien aufgebracht sein. Zur Verbesserung der Haftung untereinander oder am Abdeckteil 1 kann die Folie 3 oder können die Folien 3, 3' eine Klebstoffschicht aufweisen.

Das Abdeckteil 1 ist aus einem transparenten oder teil-transparenten Material (z.B. Polycarbonat oder Polymethylmethacrylat) gebildet und die Folie 3 oder die Folien 3, 3' sind ebenfalls transparent oder teil-transparent.

Das in den Fig. 1 bis Fig. 10 dargestellte Abdeckteil 1 ist jeweils eine Stoßfängerverkleidung. Alternative Abdeckteile können eine Kotflügelverkleidung oder ein Spoiler oder eine Türverkleidung oder eine Schwellerverkleidung oder ein Dachmodul oder eine Kühlerverkleidung sein.

## Patentansprüche

1. Abdeckteil (1) eines Kraftfahrzeugs (V), wobei wenigstens ein Bereich (A) des Abdeckteils (1) dafür vorgesehen ist von elektromagnetischen Wellen zu einem Sensor (10) oder von einem Sender (10) durchdrungen zu werden, wobei Niederschlagsablagerungen in fester oder flüssiger Form auf der äußeren Oberfläche (2, 2') dieses Bereichs (A) des Abdeckteils (1) durch die Beschaffenheit der Oberfläche (2, 2') beseitigt und/oder verhindert werden, wobei ein Material (2a), das zumindest auf der Oberfläche (2, 2') dieses Bereichs (A) des Abdeckteils (1) verwendet ist und diese Niederschlagsablagerungen verhindert hydrophobe Eigenschaften aufweist,
**dadurch gekennzeichnet, dass**
die Oberfläche (2, 2') und das Material (2a) durch eine wechselbare Folie (3, 3') definiert wird, die zumindest auf der nach außen freiliegenden Seite (4) hydrophobe Eigenschaften aufweist, wobei hydrophobe Eigenschaften bedeutet, dass die Oberfläche bei Raumtemperatur mit Wasser einen Kontaktwinkel größer 90 Grad ausbildet, wobei eine Vielzahl von wenigstens zwei derartiger Folien (3, 3') vorgesehen ist, die übereinander angeordnet und wie ein abreißbares Abreißvisier ausgebildet sind, sodass bei Nachlassen der hydrophoben Eigenschaften der außenliegenden Folie (3) diese außenliegende Folie (3) abgerissen werden kann, damit die darunter befindliche weitere Folie (3') die neue hydrophobe Oberfläche (2') bildet.

2. Abdeckteil (1) nach Anspruch 1, **dadurch gekennzeichnet, dass** das Folienmaterial (2a) zusätzlich ultraviolette Strahlung absorbiert und/oder die Folie (3) oder die Folien (3, 3') eine zusätzliche, ultraviolette Strahlung absorbierende Schicht aufweist oder aufweisen.

3. Abdeckteil (1) nach einem der vorstehenden Ansprüche, **dadurch gekennzeichnet, dass** die Folie (3) oder die Folien (3, 3') durch eine Beschichtung des Bereichs (A) des Abdeckteils (1) gebildet sind.

4. Abdeckteil (1) nach einem der vorstehenden Ansprüche, **dadurch gekennzeichnet, dass** die Folie (3) oder die Folien (3, 3') als Sprühfolien aufgebracht sind.

5. Abdeckteil (1) nach einem der vorstehenden Ansprüche, **dadurch gekennzeichnet, dass** die Folie (3) oder die Folien (3, 3') eine Klebstoffschicht aufweisen.

6. Abdeckteil (1) nach einem der vorstehenden Ansprüche, **dadurch gekennzeichnet, dass** das Abdeckteil (1) aus einem transparenten oder teil-transparenten Material gebildet ist und die Folie (3) oder die Folien (3, 3') ebenfalls transparent oder teil-transparent sind.

7. Abdeckteil (1) nach einem der vorstehenden Ansprüche, **dadurch gekennzeichnet, dass** das Abdeckteil (1) eine Stoßfängerverkleidung oder eine Kotflügelverkleidung oder ein Spoiler oder eine Türverkleidung oder eine Schwellerverkleidung oder ein Dachmodul oder eine Kühlerverkleidung ist.

8. Abdeckanordnung eines Kraftfahrzeuges mit einem Abdeckteil (1) nach einem der vorstehenden Ansprüche und mit einem hinter dem Abdeckteil (1) angeordneten Sensor (10) und/oder Sender (10).

9. Abdeckanordnung nach Anspruch 8, **dadurch gekennzeichnet, dass** der Sensor (10) und/oder Sender (10) einen Lidar-Sensor und/oder einen Radarsensor und/oder einen Radarstrahler und/oder einen Kamerasensor und/oder einen Infrarotsensor und/oder einen Infrarotstrahler umfasst.

## Claims

1. Cover part (1) of a motor vehicle (V), wherein at least one area (A) of the cover part (1) is provided to be penetrated by electromagnetic waves to a sensor (10) or by a transmitter (10), wherein precipitation deposits in solid or liquid form on the outer surface (2, 2') of this area (A) of the cover part (1) are eliminated and/or prevented by the nature of the surface (2, 2'), wherein a material (2a ), which is used at least on the surface (2, 2 ') of this area (A) of the cover part (1) and prevents these precipitation deposits, has hydrophobic properties, **characterised in that**
the surface (2, 2') and the material (2a) are defined by an exchangeable film (3, 3'), which has hydrophobic properties at least on the outwardly exposed side (4), wherein hydrophobic properties mean that the surface at room temperature forms a contact angle greater than 90 degrees with water, wherein a plurality of at least two such films (3, 3') are provided, which are arranged above one another and are formed like a detachable tear-off visor, so that when the hydrophobic properties of the outer film (3) diminish, this outer film (3) can be torn off, such that the other film (3') located thereunder forms the new hydrophobic surface (2').

2. Cover part (1) according to claim 1, **characterised in that** the film material (2a) additionally absorbs ultraviolet radiation and/or the film (3) or the films (3, 3') has or have an additional layer absorbing ultraviolet radiation.

3. Cover part (1) according to one of the preceding claims, **characterised in that** the film (3) or the films (3, 3') are formed by a coating of the area (A) of the cover part (1).

4. Cover part (1) according to any one of the preceding claims, **characterised in that** the film (3) or the films (3, 3') are applied as spray films.

5. Cover part (1) according to any one of the preceding claims, **characterised in that** the film (3) or the films (3, 3') have an adhesive layer.

6. Cover part (1) according to any one of the preceding claims, **characterised in that** the cover part (1) is formed of a transparent or partly transparent material and the film (3) or the films (3, 3') are likewise transparent or partly transparent.

7. Cover part (1) according to any one of the preceding claims, **characterised in that** the cover part (1) is a bumper cover or a fender cover or a spoiler or a door panel or a sill trim or a roof module or a radiator cowling.

8. Cover arrangement of a motor vehicle with a cover part (1) according to any one of the preceding claims and with a sensor (10) and/or transmitter (10) arranged behind the cover part (1).

9. Cover arrangement according to claim 8, **characterised in that** the sensor (10) and/or transmitter (10) comprises a Lidar sensor and and/or a radar sensor and/or a radar emitter and/or a camera sensor and/or an infrared sensor and/or an infrared emitter.

## Revendications

1. Partie de recouvrement (1) d'un véhicule à moteur (V), dans laquelle au moins une zone (A) de la partie de recouvrement (1) est prévue pour être traversée par des ondes électromagnétiques en direction d'un capteur (10) ou provenant d'un émetteur (10), dans laquelle la formation de dépôts sous forme solide ou liquide est éliminée et/ou empêchée sur la surface extérieure (2, 2') de ladite zone (A) de la partie de recouvrement (1) du fait de la nature de la surface (2, 2'), dans laquelle un matériau (2a), qui est utilisé au moins sur la surface (2, 2') de ladite zone (A) de la partie de recouvrement (1) et qui empêche la formation de ces dépôts, présente des propriétés hydrophobes,
**caractérisée en ce que**
la surface (2, 2') et le matériau (2a) sont définis par un film (3, 3') interchangeable, qui présente, au moins sur sur le côté (4) à découvert vers l'extérieur, des propriétés hydrophobes, dans laquelle des propriétés hydrophobes signifie que la surface forme à température ambiante avec l'eau un angle de contact supérieur à 90°, dans laquelle une pluralité d'au moins deux films (3, 3') de ce type sont prévus, qui sont disposés les uns au-dessus des autres et sont réalisés comme une visière à déchirer déchirable si bien qu'en cas de diminution des propriétés hydrophobes du film (3) situé à l'extérieur, ledit film (3) situé à l'extérieur peut être déchiré pour que l'autre film (3') se trouvant en-dessous forme la nouvelle surface (2') hydrophobe.

2. Partie de recouvrement (1) selon la revendication 1, **caractérisée en ce que** le matériau de film (2a) absorbe en supplément un rayonnement ultraviolet et/ou le film (3) ou les films (3, 3') présente ou présentent une couche supplémentaire d'absorption du rayonnement ultraviolet.

3. Partie de recouvrement (1) selon l'une quelconque des revendications précédentes, **caractérisée en ce que** le film (3) ou les films (3, 3') sont formés par un revêtement de la zone (A) de la partie de recouvrement (1).

4. Partie de recouvrement (1) selon l'une quelconque des revendications précédentes, **caractérisée en ce que** le film (3) ou les films (3, 3') sont appliqués en tant que films pulvérisés.

5. Partie de recouvrement (1) selon l'une quelconque des revendications précédentes, **caractérisée en ce que** le film (3) ou les films (3, 3') présentent une couche de colle.

6. Partie de recouvrement (1) selon l'une quelconque des revendications précédentes, **caractérisée en ce que** la partie de recouvrement (1) est formée à partir d'un matériau transparent ou semi-transparent et le film (3) ou les films (3, 3') sont également transparents ou semi-transparents.

7. Partie de recouvrement (1) selon l'une quelconque des revendications précédentes, **caractérisée en ce que** la partie de recouvrement (1) est un habillage de pare-chocs ou un habillage de garde-boue ou un spoiler ou un habillage de portière ou un habillage de seuil ou un module de toit ou un habillage de radiateur.

8. Ensemble de recouvrement d'un véhicule à moteur avec une partie de recouvrement (1) selon l'une quelconque des revendications précédentes, et avec un capteur (10) et/ou émetteur (10) disposés derrière la partie de recouvrement (1).

9. Ensemble de recouvrement selon la revendication 8, **caractérisé en ce que** le capteur (10) et/ou l'émetteur (10) comprennent un capteur lidar et/ou un capteur radar et/ou un émetteur radar et/ou un capteur de caméra et/ou un capteur infrarouge et/ou un émetteur infrarouge.
